# EUROPEAN PATENT APPLICATION

(11) **EP 4 089 777 A1**
(43) Date of publication of application: **16.11.2022**
(21) Application number: 21188105.7
(22) Date of filing: 28.07.2021
(51) Int. Cl.: H01M 10/04, H01M 10/058, H01M 50/103, H01M 50/204, H01M 50/528, H01M 50/533, H01M 50/536, H01M 50/553

(54) **BATTERY, BATTERY MODULE, BATTERY PACK AND BATTERY MANUFACTURING METHOD**

(30) Priority: 14.05.2021 CN 202110528539
(71) Applicant: CALB Co., Ltd., Changzhou City, Jiangsu Province (CN)
(72) Inventor: PAN, Fangfang, Changzhou City, Jiangsu Province (CN); XU, Jiuling, Changzhou City, Jiangsu Province (CN); ZHANG, Yongjie, Luoyang City, Henan Province (CN); QI, Binwei, Luoyang City, Henan Province (CN)
(74) Representative: Becker, Eberhard

(57) **Abstract**

The disclosure provides a battery, a battery module, a battery pack, and a battery manufacturing method. The battery includes a housing (10), a cell (20), a pole assembly (30) and a connecting piece (40). The housing (10) includes two first surfaces (11) opposite to each other in a first direction. The cell (20) is arranged in the housing (10) and includes a cell body (21) and a tab portion (22). The tab portion (22) includes two or more single-piece tabs extending from the lateral side of the cell body (21). The pole assembly (30) is arranged on the first surface (11), and the tab portion (22) and the pole assembly (30) are connected through the connecting piece (40). The vertical distance between an end of the tab portion (22) away from the lateral side of the cell body (21) and the lateral side of the cell body (21) is smaller than the vertical distance between the pole assembly (30) and lateral side of the cell body (21).

## Description

### BACKGROUND

### Field of the Disclosure

The disclosure relates to the technical field of batteries, in particular to a battery, a battery module, a battery pack and a battery manufacturing method.

### Description of Related Art

In the related art, the tab portion of the battery is connected with the pole of the cover plate, and the tab portion needs to be bent during welding. Due to the limitation of the structure of the tab portion, after the tab portion is connected to the pole, the tab portion is very likely to form electrical connection with other components.

### SUMMARY OF THE DISCLOSURE

According to the first aspect of the disclosure, a battery is provided, which includes:

A housing includes two first surfaces opposite to each other in a first direction.

A cell is arranged in the housing. The cell includes a cell body and a tab portion. The tab portion includes two or more single-piece tabs extending from the lateral side of the cell body. When the single-piece tabs are flattened along the direction perpendicular to the lateral side of the cell body, the overlapping direction of the single-piece tabs is the first direction.

A pole assembly is arranged on a first surface.

A connecting piece is included, and the tab portion and the pole assembly are connected through the connecting piece.

The vertical distance between an end of the tab portion away from the lateral side of the cell body and the lateral side of the cell body is smaller than the vertical distance between the pole assembly and the lateral side of the cell body, so that the orthographic projections of the tab portion and the pole assembly along the first direction are not overlapped on a first surface.

According to a second aspect of the disclosure, a battery manufacturing method is provided, which includes:

A housing is provided, which includes two first surfaces opposite to each other in a first direction, and the first surface is provided with a pole assembly thereon.

A cell is provided, which is arranged in the housing. The cell includes a cell body and a tab portion. The tab portion includes two or more single-piece tabs extending from the lateral side of the cell body. When the single-piece tabs are flattened along the direction perpendicular to the lateral side of the cell body, the overlapping direction of the single-piece tabs is the first direction.

A connecting piece is provided, and the tab portion and the pole assembly are connected through the connecting piece.

The vertical distance between an end of the tab portion away from the lateral side of the cell body and the lateral side of the cell body is smaller than the vertical distance between the pole assembly and the lateral side of the cell body, so that the orthographic projections of the tab portion and the pole assembly along the first direction are not overlapped on a first surface.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views. Specifically,
Fig. 1 is a schematic flowchart of a battery manufacturing method according to an exemplary embodiment.
Fig. 2 is a schematic view showing a partial structure of a battery according to a first exemplary embodiment.
Fig. 3 is a schematic view showing a partial structure of a battery according to a third exemplary embodiment.

### DESCRIPTION OF EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

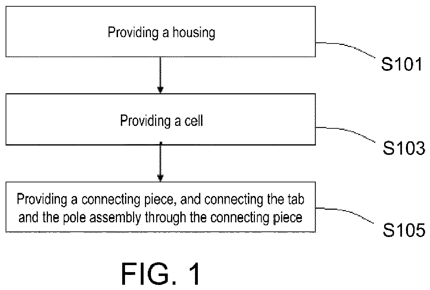

An embodiment of the disclosure provides a battery manufacturing method. Please refer to FIG. 1. The battery manufacturing method includes:

Step S101: A housing 10 is provided, which includes two first surfaces 11 opposite to each other in a first direction, and the first surface 11 is provided with a pole assembly 30 thereon.

Step S103: A cell 20 is provided, which is arranged in the housing 10. The cell 20 includes a cell body 21 and a tab portion 22. The tab portion 22 includes two or more single-piece tabs extending from the lateral side of the cell body 21. When the single-piece tabs are flattened along the direction perpendicular to the lateral side of the cell body 21, the overlapping direction of the single-piece tabs is the first direction.

Step S105: A connecting piece 40 is provided, and the tab portion 22 and the pole assembly 30 are connected through the connecting piece 40.

The vertical distance between an end of the tab portion 22 away from the lateral side of the cell body 21 and the lateral side of the cell body 21 is smaller than the vertical distance between the pole assembly 30 and the lateral side of the cell body 21, so that the orthographic projections of the tab portion 22 and the pole assembly 30 along the first direction are not overlapped on a first surface 11.

The battery manufacturing method in an embodiment of the disclosure enables the multiple single-piece tabs that are gathered to form a tab portion 22 and connected with the pole assembly 30 arranged on the housing 10 through the connecting piece 40, thus the connection between the tab portion 22 and the pole assembly 30 can be completed quickly. Moreover, the orthographic projections of the tab portion 22 and the pole assembly 30 along the first direction are not overlapped on a first surface 11. Furthermore, the vertical distance between an end of the tab portion 22 away from the lateral side of the cell body 21 and the lateral side of the cell body 21 is smaller than the vertical distance between the pole assembly 30 and the lateral side of the cell body 21. That is, the tab portion 22 and the pole assembly 30 are not directly opposite to each other, and the tab portion 22 is substantially located between the cell body 21 and the pole assembly 30, so the tab portion 22 will not form electrical connection with other structures of the pole assembly 30 away from one side of the cell body 21. In this manner, the safety performance of the battery can be improved.

The two or more single-piece tabs extending from the lateral side of the cell body 21 are gathered together to form the tab portion 22. When the single-piece tabs are flattened in a direction perpendicular to the lateral side of the cell body 21, the large surface of the single-piece tabs is parallel to or substantially parallel to the surface of the housing 10 on which the pole assembly 30 is provided.

It should be noted that the vertical distance between one end of the tab portion 22 away from the lateral side of the cell body 21 and the lateral side of the cell body 21 is less than the minimum vertical distance between the pole assembly 30 and the lateral side of the cell body 21. That is, the tab portion 22 includes the first end and the second end, the first end is connected to the cell body 21, while the second end is a free end. The second end will not be located in the space where the pole assembly 30 is located, so that the tab portion 22 and the pole assembly 30 need to be connected through the connecting piece 40, and the second end can only be located on a side of the pole assembly 30 close to the cell body 21. Therefore, there will be no contact between the second end and other structures, thus avoiding battery safety risks.

It should be noted that the cell body 21 includes two or more pole pieces, and the tab portion 22 includes two or more single-piece tabs. The single-piece tabs respectively extend from the corresponding pole pieces. The width of the single-piece tabs is smaller than the width of the pole piece, and a plurality of single-piece tabs are stacked to form a tab portion 22 and welded to the pole assembly 30. Therefore, before a plurality of single-piece tabs are stacked, the large surface of the single-piece tabs is parallel to or substantially parallel to the surface of the housing 10 where the pole assembly 30 is provided. The parallel to or substantially parallel to mentioned here is set in consideration of specific process errors and the like. If various errors are ignored, the large surface of the single-piece tabs can be parallel to the surface of the housing 10 where the pole assembly 30 is provided. Optionally, when the single-piece tabs are flattened in a direction perpendicular to the lateral side of the cell body 21, the included angle between the large surface of the single-piece tabs and the surface of the housing 10 where the pole assembly 30 is provided is 0 degrees to 10 degrees. Further, the included angle between the large surface of the single-piece tabs and the surface of the housing 10 on which the pole assembly 30 is provided is 0 degrees to 5 degrees. In some embodiments, it is not excluded that the width of the single-piece tabs is consistent with the width of the pole piece.

It should be noted that the disclosure provides no limitation to the sequence of providing the housing 10, the cell 20 and the connecting piece 40.

Optionally, the single-piece tab is made of metal foil with good electrical and thermal conductivity, such as aluminum, copper, or nickel.

In an embodiment, the cell 20 is a laminated cell, and the cell 20 has a first pole piece laminated onto each other, a second pole piece electrically opposite to the first pole piece, and a separator film arranged between the first pole piece and the second pole piece, so that multiple pairs of the first pole piece and the second pole piece are laminated to form a laminated cell.

In an embodiment, the tab portion 22 is welded to the connecting piece 40, and the connecting piece 40 is welded to the pole assembly 30. The welding may be performed by adopting any one of laser welding, ultrasonic welding and resistance welding. The tab portion 22 and the pole assembly 30 are connected through the connecting piece 40. The setting of the connecting piece 40 can facilitate the selection of the welding position for the tab portion 22 and the pole assembly 30, and the selectivity of welding will be more flexible, so the difficulty of welding can be further reduced.

In an embodiment, after a plurality of single-piece tabs are gathered together, the tab portion 22 close to the pole assembly 30 is formed, that is, relative to the center position of the lateral portion of the cell body 21, the tab portion 22 is deviated from the center position and deviated toward a side close to the pole assembly 30, which facilitates subsequent connection of the tab portion 22 and the pole assembly 30. Further, the single-piece tabs are gathered together to form the tab portion 22. The tab portion 22 is close to the surface of the housing 10 where the pole assembly 30 is provided, that is, most of the single-piece tabs are gathered along the direction close to the surface of the housing 10 where the pole assembly 30 is provided, and only a few single-piece tabs are gathered along the direction away from the surface of the housing 10 where the pole assembly 30 is provided.

Specifically, most of the single-piece tabs are gathered in the direction close to the pole assembly 30 to form the tab portion 22, that is, after the cell body 21 is formed by stacking or winding, the plurality of single-piece tabs are separated from each other. Therefore, the plurality of single-piece tabs need to be gathered together. In the embodiment, by gathering most of the single-piece tabs together in the direction close to the pole assembly 30, the tab portion 22 is formed after the single-piece tabs are gathered. The overall tab portion 22 is bent toward the surface of the housing 10 where the pole assembly 30 is provided, so that the tab portion 22 and the pole assembly 30 are close to each other to facilitate subsequent welding.

In an embodiment, the connecting piece 40 can be pre-placed on the pole assembly 30, that is, the pole assembly 30 passes through the connecting piece 40, for example, welding or riveting is used to realize the connection between the pole assembly 30 and the connecting piece 40. After each of the single-piece tabs is gathered in a direction close to the pole assembly 30 to form the tab portion 22, the tab portion 22 is in contact with the connecting piece 40 so that subsequent welding can be completed. The connecting piece 40 can be pre-placed on the pole assembly 30, that is, one side of the connecting piece 40 may be welded to one end of the pole assembly 30, and the other side of the connecting piece 40 is welded to the tab portion 22. The other end of the pole assembly 30 can be configured to connect with the bus bar, so as to group multiple batteries.

In an embodiment, a plurality of single-piece tabs are gathered and welded, and after welding, the single-piece tabs are bent in a direction close to the pole assembly 30 to form the tab portion 22. After the multiple single-piece tabs are gathered, relative to the center position of the lateral portion of the cell body 21, the multiple gathered single-piece tabs deviate from the center position and deviate toward a side away from the pole assembly 30. Subsequently, the multiple single-piece tabs are bent in a direction close to the pole assembly 30 so that the tab portion 22 is close to the pole assembly 30. Further, the single-piece tabs are gathered and welded, and after welding, the single-piece tabs are bent in a direction close to the pole assembly 30 to form the tab portion 22. The tab portion 22 is close to the surface of the housing 10 on which the pole assembly 30 is provided, that is, at least part of the single-piece tabs are gathered along the direction away from the surface of the housing 10 where the pole assembly 30 is provided, so that the gathered single-piece tabs are away from the surface of the housing 10 on which the pole assembly 30 is provided. Therefore, bending is required to make the tab portion 22 close to the pole assembly 30.

Specifically, at least part of the single-piece tabs are gathered in a direction away from the pole assembly 30 and welded, and after welding, the at least part of the single-piece tabs are bent in a direction close to the pole assembly 30 to form a tab portion 22. At least part of the single-piece tabs are first gathered in the direction away from the pole assembly 30, and then fixed by welding after being gathered. That is, since the gathered single-piece tabs are far away from the pole assembly 30, it is convenient to perform pre-welding, and bending is performed after fixing, so that the tab portion 22 is close to the pole assembly 30 to facilitate subsequent welding.

Optionally, each of the single-piece tabs can be gathered along the single-piece tabs farthest from the pole assembly 30, so as to maximize the distance between the gathered single-piece tabs and the pole assembly 30, which is convenient for performing pre-welding on the single-piece tabs subsequently. That is, there is enough space to place welding-related parts, such as welding heads or welding supports.

Optionally, each of the single-piece tabs is gathered and welded along the direction close to the plane where the center line (that is, the center of the lateral portion of the cell body 21) parallel to or substantially parallel to the lateral side of the cell body 21 is located. After welding, the single-piece tabs are bent in the direction close to the pole assembly 30 to form a tab portion 22. The plane where the center line of the lateral side of the cell body 21 is located is perpendicular to the lateral side of the cell body 21. The multiple single-piece tabs 221 are first gathered toward the middle, and fixed by welding after being gathered, and then bent after fixing, so that the tab portion 22 is close to the pole assembly 30 to facilitate subsequent welding.

Optionally, each of the single-piece tabs is welded before bending to form an ultrasonic welding mark, and the tab portion 22 is welded to the pole assembly 30 to form a laser welding mark. Specifically, the single-piece tabs are metal foil sheets. The first welding realizes the connection of multiple single-piece tabs, the second welding forms the connection between the tab portion 22 and the connecting piece 40. The first welding adopts ultrasonic welding. The multiple metal foil sheets of the tab portion 22 are combined into a whole by ultrasonic action. It can be regarded that the multiple metal foil sheets are formed as a whole, and the ultrasonic welding area of the tab portion becomes a metal plate, which enhances the strength of the tab portion, so as to avoid damage to the tab portion. Correspondingly, the second welding adopts laser welding. The connecting piece 40 and the metal plate formed by the first welding are welded, and the metal plate formed by the first welding is fixedly connected to the connecting piece 40 through laser. The strength of the connection is enhanced, that is, the welding of the tab portion 22 and the connecting piece 40 is realized.

In an embodiment, the single-piece tabs are gathered and welded to form a tab portion 22, and the tab portion 22 is away from the surface of the housing 10 on which the pole assembly 30 is provided. That is, after a plurality of single-piece tabs are gathered, relative to the center position at the lateral portion of the cell body 21, the gathered tab portion 22 is deviated from the center position, and is deviated toward a side away from the surface of the housing 10 where the pole assembly 30 is provided. Moreover, the single-piece tabs may not be bent after being gathered, and the connection of the single-piece tabs with the connecting piece 40 is directly realized.

Optionally, each of the single-piece tabs can be gathered along the single-piece tabs furthest from the pole assembly 30, so as to maximize the distance between the gathered single-piece tabs and the pole assembly 30, which is convenient for performing pre-welding on the single-piece tabs subsequently.

Optionally, each of the single-piece tabs is gathered and welded along the direction close to the plane where the center line parallel to or substantially parallel to the lateral side of the cell body 21 is located to form a tab portion 22. That is, the single-piece tabs may not be bent after being gathered, and the connection of the single-piece tabs with the connecting piece 40 is directly realized.

In this embodiment, the height of the pole assembly 30 can be made higher to realize the connection between the pole assembly 30 and the tab portion 22 through the connecting piece 40. Alternatively, the connecting piece 40 may be bent so that the two opposite surfaces of the connecting piece 40 form a height difference, so as to realize the connection between the pole assembly 30 and the tab portion 22, that is, the connecting piece 40 has a shape that is similar to a Z-shape.

In an embodiment, the connecting piece 40 may be pre-placed on the single-piece tabs after being gathered, a plurality of single-piece tabs are bent to form a tab portion 22, the connecting piece 40 on the tab portion 22 is in contact with the pole assembly 30, and then welding is performed.

In an embodiment, a side of the tab portion 22 formed after being gathered away from the lateral side of the cell body 21 is not bent, so that an end of the tab portion 22 away from the lateral side of the cell body 21 is directly opposite to the connecting piece 40. That is, the length of the single-piece tabs is relatively short. After the tab portion 22 is formed after the gathering, one end of the tab portion 22 away from the cell body 21 is located on a side of the pole assembly 30 close to the cell body 21. Therefore, the tab portion 22 does not need to be processed, but welded to the connection piece 40.

One end of the tab portion 22 away from the lateral side of the cell body 21 is connected to the connecting piece 40. Under the circumstances, one end of the tab portion 22 can be butted to the connecting piece 40 to complete the welding. Alternatively, one end of the tab portion 22 may be located on one side of the connecting piece 40, that is, a part of the tab portion 22 is stacked with the connecting piece 40, thereby completing the welding.

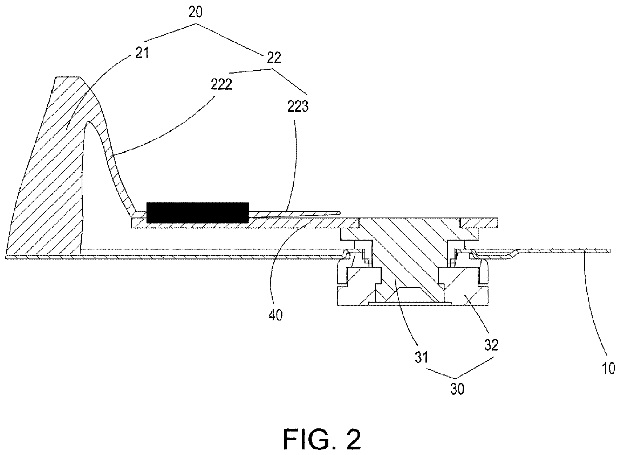

As shown in combination with FIG. 2, the tab portion 22 includes a first segment 222 and a second segment 223. One end of the first segment 222 is connected to the cell body 21, and the other end of the first segment 222 is connected to the second segment 223. At least part of the second segment 223 is connected to the connecting piece 40, and all of the second segment 223 is directly opposite to the connecting piece 40, that is, the second segment 223 is not subjected to bending processing. One end of the second segment 223 away from the first segment 222 will not be directly opposite to the pole assembly 30, so that the orthographic projections of the tab portion 22 and the pole assembly 30 along the first direction are not overlapped on a first surface 11. As shown in FIG. 2, after the single-piece tabs are gathered, the single-piece tabs are bent along the direction close to the pole assembly 30 to form the first segment 222 and the second segment 223, and a certain included angle is formed between the first segment 222 and the second segment 223.

It should be noted that the second segment 223 may be partially welded to the connecting piece 40. For example, one side of the second segment 223 away from the first segment 222 is not welded to the connecting piece 40. Alternatively, the second segment 223 may be completely welded to the connecting piece 40. A large surface of the second segment 223 is flat, and the tab portion 22 is formed by gathering a plurality of single-piece tabs. Therefore, the formed tab portion 22 is a structure gradually thinning outward from the cell body 21. Therefore, the second segment 223 has two large surfaces, and when at least one large surface is a flat surface, it can be regarded that the second segment 223 is not bent.

In an embodiment, a side of the tab portion 22 formed after being gathered away from the lateral side of the cell body 21 is bent toward a side away from the pole assembly 30, so that one end of the tab portion 22 away from the lateral side of the cell body 21 is bent accordingly. Under the circumstances, one end of the tab portion 22 away from the lateral side of the cell body 21 is not connected to the connecting piece 40, that is, the length of the single-piece tabs is longer. After the tab portion 22 is gathered to form the tab portion 22, one end of the tab portion 22 away from the cell body 21 will exceed one side of the pole assembly 30 close to the cell body 21, so the tab portion 22 needs to be bent to ensure that the orthographic projections of the tab portion 22 and the pole assembly 30 along the first direction are not overlapped on a first surface 11.

In an embodiment, one end of the tab portion 22 that is formed after being gathered away from the lateral side of the cell body 21 is cut. That is, the length of the single-piece tabs is longer. After the tab portion 22 is formed after the gathering, one end of the tab portion 22 away from the cell body 21 will exceed a side of the pole assembly 30 close to the cell body 21, so it is necessary to cut the tab portion 22 to ensure that the orthographic projections of the tab portion 22 and the pole assembly 30 along the first direction are not overlapped on a first surface 11. The tab portion 22 can be cut before welding or after welding.

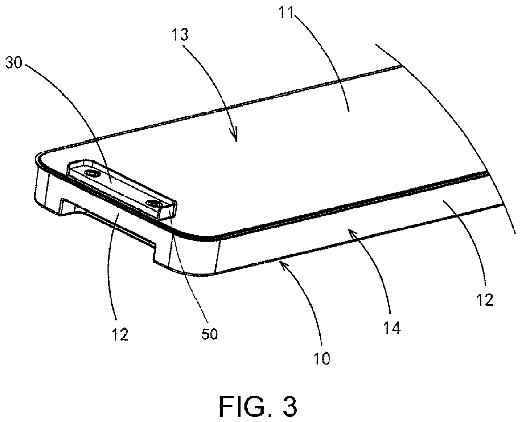

An embodiment of the disclosure provides a battery, as shown in FIG. 2 and FIG. 3, including: a housing 10, the housing 10 includes two first surfaces 11 opposite to each other in a first direction; a cell 20, the cell 20 is arranged in the housing 10, and the cell 20 includes a cell body 21 and a tab portion 22, and the tab portion 22 includes two or more single-piece tabs extending from the lateral side of the cell body 21. When the single-piece tabs are flattened in a direction perpendicular to the lateral side of the cell body 21, the overlapping direction of the single-piece tabs is the first direction. A pole assembly 30 is further included, which is arranged on the first surface 11. A connecting piece 40 is provided, and the tab portion 22 and the pole assembly 30 are connected through the connecting piece 40. The vertical distance between an end of the tab portion 22 away from the lateral side of the cell body 21 and the lateral side of the cell body 21 is smaller than the vertical distance between the pole assembly 30 and the lateral side of the cell body 21, so that the orthographic projections of the tab portion 22 and the pole assembly 30 along the first direction are not overlapped on a first surface 11.

A battery in an embodiment of the disclosure includes a housing 10, a cell 20, a pole assembly 30, and a connecting piece 40. The tab portion 22 includes two or more single-piece tabs extending from the lateral side of the cell body. The tab portion 22 and the pole assembly 30 arranged on the housing 10 are connected through the connecting piece 40, so that the connection between the tab portion 22 and the pole assembly 30 is quickly completed. Moreover, the orthographic projections of the tab portion 22 and the pole assembly 30 along the first direction are not overlapped on a first surface 11, and the vertical distance between an end of the tab portion 22 away from the lateral side of the cell body 21 and the lateral side of the cell body 21 is smaller than the vertical distance between the pole assembly 30 and lateral side of the cell body 21. That is, the tab portion 22 and the pole assembly 30 are not directly opposite to each other, and the tab portion 22 is substantially located between the cell body 21 and the pole assembly 30, so the tab portion 22 will not form electrical connection with other structures of the pole assembly 30 away from one side of the cell body 21. In this manner, the safety performance of the battery can be improved.

In an embodiment, the connecting piece 40 is located between the tab portion 22 and the pole assembly 30, that is, two opposite surfaces of the connecting piece 40 are respectively connected to the tab portion 22 and the pole assembly 30. Under the circumstances, the tab portion 22, the connecting piece 40 and the pole assembly 30 may be stacked. Or, the connecting piece 40 is butted with the tab portion 22, and the connecting piece 40 is butted with the pole assembly 30. As shown in FIG. 2, the connecting piece 40 can be sleeved on the pole assembly 30. Under the circumstances, the connecting piece 40 is also located between the tab portion 22 and the pole assembly 30, and the two opposite surfaces of the connecting piece 40 are connected to the tab portion 22 and the pole assembly 30, respectively.

In an embodiment, the connecting piece 40 is located on the same side of the tab portion 22 and the pole assembly 30, that is, one of the two opposite surfaces of the connecting piece 40 is connected to both the tab portion 22 and the pole assembly 30. Under the circumstances, the connecting piece 40 can be welded to the top of the tab portion 22 and welded to the top of the pole assembly 30.

In an embodiment, the orthographic projections of the tab portion 22 and the pole assembly 30 along the first direction on a first surface 11 are sequentially arranged along the second direction. When the single-piece tabs are flattened along the direction perpendicular to the lateral side of the cell body 21, the extending direction of the single-piece tabs is the second direction. One end of the tab portion 22 away from the lateral side of the cell body 21 can be connected to the connecting piece 40, that is, the tab portion 22 formed after being gathered does not need to be bent. After the tab portion 22 is formed after the gathering, one end of the tab portion 22 away from the cell body 21 is located on one side of the pole assembly 30 that is close to the cell body 21. Therefore, the tab portion 22 does not need to be processed, but welded to the connecting piece 40.

The tab portion 22 includes a first segment 222 and a second segment 223. One end of the first segment 222 is connected to the cell body 21, and the other end of the first segment 222 is connected to the second segment 223. At least part of the second segment 223 is connected to the connecting piece 40, and all of the second segment 223 is directly opposite to the connecting piece 40, that is, the second segment 223 is not subjected to bending processing. One end of the second segment 223 away from the first segment 222 will not be directly opposite to the pole assembly 30, so that the orthographic projections of the tab portion 22 and the pole assembly 30 along the first direction are not overlapped on a first surface 11.

Optionally, a large surface of the second segment 223 is flat, and the tab portion 22 is formed by gathering a plurality of single-piece tabs. Therefore, the formed tab portion 22 is a structure gradually thinning outward from the cell body 21. Therefore, the second segment 223 has two large surfaces. Moreover, when at least one of the large surfaces is flat, it can be regarded that when each single-piece tab is gathered to a single-piece tab furthest away from the pole assembly 30, the surface of the tab portion 22 away from the pole assembly 30 is flat, that is, the second segment 223 is not bent. Or, when each single-piece tab is gathered to a single-piece tab closest to the pole assembly 30, the surface of the tab portion 22 close to the pole assembly 30 is flat, that is, the second segment 223 is not bent.

One end of the second segment 223 away from the first segment 222 is a free end, that is, the terminal end of the tab portion 22. The second segment 223 is welded to the connecting piece 40.

It should be noted that the orthographic projections of the tab portion 22 and the pole assembly 30 along the first direction on the first surface 11 are sequentially arranged along the second direction. That is, if the tab portion 22 is extended in the first direction, the orthographic projections of the tab portion 22 and the pole assembly 30 along the first direction are overlapped on a first surface 11.

One end of the tab portion 22 away from the lateral side of the cell body 21 is connected to the connecting piece 40. Under the circumstances, one end of the tab portion 22 can be butted to the connecting piece 40 to complete the welding. Alternatively, one end of the tab portion 22 may be located on one side of the connecting piece 40, that is, a part of the tab portion 22 is stacked with the connecting piece 40, thereby completing the welding.

Optionally, one side of the tab portion 22 formed after being gathered away from the lateral side of the cell body 21 is bent toward one side away from the pole assembly 30, so that one end of the tab portion 22 away from the lateral side of the cell body 21 is bent accordingly. One end of the tab portion 22 away from the lateral side of the cell body 21 is not connected to the connecting piece 40, that is, the length of the single-piece tabs is relatively long. After the tab portion 22 is formed after the gathering, one end of the tab portion 22 away from the cell body 21 will extend beyond one side of the pole assembly 30 close to the cell body 21, so the tab portion 22 needs to be processed to ensure that the orthographic projections of the tab portion 22 and the pole assembly 30 along the first direction are not overlapped on a first surface 11.

In an embodiment, when the single-piece tabs are flattened in a direction perpendicular to the lateral side of the cell body 21, the vertical distance between an end of the single-piece tabs away from the lateral side of the cell body 21 and the lateral side of the cell body 21 is smaller than the vertical distance between the pole assembly 30 and the lateral side of the cell body 21. Therefore, after the tab portion 22 is formed after the single-piece tabs are gathered, the orthographic projections of the tab portion 22 and the pole assembly 30 along the first direction are not overlapped on a first surface 11.

When the single-piece tabs are flattened in a direction perpendicular to the lateral side of the cell body 21, the large surface of the single-piece tabs is parallel to or substantially parallel to the surface of the housing 10 on which the pole assembly 30 is provided. That is, the single-piece tabs are parallel to or substantially parallel to the first surface 11.

Optionally, when the single-piece tabs are flattened in a direction perpendicular to the lateral side of the cell body 21, the vertical distance between an end of at least one single-piece tab away from the lateral side of the cell body 21 and the lateral side of the cell body 21 is larger than or equal to the vertical distance between the pole assembly 30 and the lateral side of the cell body 21. After the single-piece tabs are gathered to form the tab portion 22 (the overall tab portion 22 can be bent as well), the orthographic projections of the tab portion 22 and the pole assembly 30 along the first direction are not overlapped on the first surface 11.

In an embodiment, the single-piece tabs are gathered to form a tab portion 22, and the tab portion 22 is close to the surface of the housing 10 where the pole assembly 30 is provided to facilitate subsequent welding.

In an embodiment, a plurality of single-piece tabs are gathered and welded, and after welding, the single-piece tabs are bent in a direction close to the pole assembly 30 to form the tab portion 22. The tab portion 22 is close to the surface of the housing 10 on which the pole assembly 30 is provided, that is, at least part of the single-piece tabs are gathered along the direction away from the surface of the housing 10 where the pole assembly 30 is provided, so that the gathered single-piece tabs are away from the surface of the housing 10 on which the pole assembly 30 is provided. Therefore, bending is required to make the tab portion 22 close to the pole assembly 30. After the multiple single-piece tabs 221 are gathered, relative to the center position of the lateral portion of the cell body 21, the multiple gathered single-piece tabs deviate from the center position and deviate toward a side away from the pole assembly 30. Subsequently, the multiple single-piece tabs are bent in a direction close to the pole assembly 30 so that the tab portion 22 is close to the pole assembly 30. After the gathering, the tab portion 22 is fixed by welding, that is, since the gathered single-piece tabs are far away from the pole assembly 30, it is convenient for performing pre-welding, and bending is performed after fixing, so that the tab portion 22 is close to the pole assembly 30 to facilitate subsequent welding.

Optionally, each of the single-piece tabs can be gathered along the single-piece tabs furthest from the pole assembly 30, so as to maximize the distance between the gathered single-piece tabs and the pole assembly 30, which is convenient for performing pre-welding on the single-piece tabs subsequently. In other words, there is sufficient space to place welding-related parts, such as welding heads or welding supports.

Optionally, each of the single-piece tabs is gathered and welded along the direction close to the plane where the center line parallel to or substantially parallel to the lateral side of the cell body 21 is located. After welding, the single-piece tabs are bent in the direction close to the pole assembly 30 to form a tab portion 22. The plane where the center line of the lateral side of the cell body 21 is located is perpendicular to the lateral side of the cell body 21. The multiple single-piece tabs are first gathered toward the middle, and fixed by welding after being gathered, and then bent after fixing, so that the tab portion 22 is close to the pole assembly 30 to facilitate subsequent welding.

It should be noted that since the multiple single-piece tabs in this embodiment are gathered toward the middle first, that is, the single-piece tabs on the upper and lower sides are gathered toward the single-piece tabs in the middle position. Under the circumstances, there is a certain distance between the gathered structure that is formed relative to the pole assembly 30, so as to facilitate the welding and fixing of the multiple single-piece tabs. After the welding is completed, the overall single-piece tabs are bent to contact the connecting piece 40, and subsequent welding operation is completed.

In an embodiment, the single-piece tabs are gathered and welded to form a tab portion 22, and the tab portion 22 is away from the surface of the housing 10 on which the pole assembly 30 is provided. That is, the multiple single-piece tabs are gathered, relative to the center position at the lateral portion of the cell body 21, the gathered tab portion 22 deviates from the center position and deviates toward a side away from the surface of the housing 10 where the pole assembly 30 is provided. Furthermore, the single-piece tabs may not be bent after being gathered, and the connection of single-piece tabs and the connecting piece 40 is directly realized.

Optionally, each of the single-piece tabs can be gathered along the single-piece tabs furthest from the pole assembly 30, so as to maximize the distance between the gathered single-piece tabs and the pole assembly 30, which is convenient for performing pre-welding on the single-piece tabs subsequently.

Optionally, a plurality of single-piece tabs are first gathered toward the middle and welded, and then bent, and the tab portion 22 formed under the circumstances can be directly welded to the connecting piece 40.

Alternatively, after multiple single-piece tabs are gathered and welded, the connecting piece 40 can be welded to the gathered single-piece tabs first, and then bent and welded with the pole assembly 30.

Optionally, each of the single-piece tabs is gathered in a direction close to the plane where the center line parallel to or substantially parallel to the lateral side of the cell body 21 is located, and welded to form the tab portion 22. That is, the single-piece tabs may not be bent after being gathered, and directly connected to the connecting piece 40. In this embodiment, the height of the pole assembly 30 can be made higher, and the connecting piece 40 is provided between the pole assembly 30 and the tab portion 22 to connect them.

In an embodiment, each of the single-piece tabs is welded before bending to form an ultrasonic welding mark, and the tab portion 22 is welded to the pole assembly 30 to form a laser welding mark. Specifically, the single-piece tabs are metal foil sheets. The first welding realizes the connection of multiple single-piece tabs, the second welding forms the connection between the tab portion 22 and the connecting piece 40. The first welding adopts ultrasonic welding. The multiple metal foil sheets of the tab portion 22 are combined into a whole by ultrasonic action. It can be regarded that the multiple metal foil sheets are formed as a whole and become a metal plate, which enhances the strength of the tab portion, so as to avoid damage to the tab portion. Correspondingly, the second welding adopts laser welding. The connecting piece 40 and the metal plate formed by the first welding are welded, and the metal plate formed by the first welding is fixedly connected to the connecting piece 40 through laser. The strength of the connection is enhanced, that is, the welding of the tab portion 22 and the connecting piece 40 is realized.

Optionally, the first welding can also be performed through laser welding or resistance welding. Correspondingly, the second welding can also be performed through ultrasonic welding or resistance welding.

In an embodiment, as shown in FIG. 2, the pole assembly 30 may include a pole 31 and a terminal 32, the pole assembly 30 may include at least two poles 31, the connecting piece 40 may be connected to the at least two poles 31, and the terminal 32 is located outside the housing 10.

Optionally, the housing 10 is approximately a rectangular structure, that is, while ignoring processing and manufacturing errors, the housing 10 may have a rectangular structure.

In an embodiment, as shown in FIG. 3, the housing 10 includes two opposite first surfaces 11 and four second surfaces 12 arranged around the first surface 11, that is, the housing 10 is approximately a rectangular structure. The area of the first surface 11 is greater than the area of the second surface 12; the pole assembly 30 is disposed on the first surface 11, so as to ensure that the pole assembly 30 has a reliable supporting surface, and the stability of the pole assembly 30 can be ensured.

It should be noted that the two opposite first surfaces 11 are the large surfaces of the housing 10, and the four second surfaces 12 are the small surfaces of the housing 10. The four second surfaces 12 include two pairs of small surfaces, namely the first pair of small surfaces extending in the length direction of the housing 10 and the second pair of small surfaces extending in the width direction of the housing 10. The area of the first pair of small surfaces is larger than the area of the second pair of small surfaces, but both are smaller than the area of the large surface. The housing 10 has a length direction and a width direction, and both the length direction and the width direction are linear directions. The length direction may be the longer extension direction of the housing 10, and the width direction may be the shorter extension direction of the housing 10.

In an embodiment, the material of the housing 10 may be stainless steel or aluminum, which has good corrosion resistance and sufficient strength. The thickness of the housing 10 is uniform, which not only has strong structural stability, but also facilitates processing.

In an embodiment, as shown in FIG. 3, the housing 10 includes: a first housing member 13; a second housing member 14, and the second housing member 14 is connected with the first housing member 13 to close the cell 20. The pole assembly 30 is provided on the first housing member 13 or the second housing member 14. The first housing member 13 and the second housing member 14 are arranged separately, which can facilitate the configuration of the cell 20 and the processing is also easy.

Optionally, the first housing member 13 and the second housing member 14 may both be formed with receiving cavities. After the first housing member 13 and the second housing member 14 are butted, the cell 20 is located in the cavity formed by the two receiving cavities. The depth of the receiving cavity belonging to the first housing member 13 and the second housing member 14 may be the same or different, which is not limited by the disclosure.

Optionally, the first housing member 13 is a flat plate, the second housing member 14 is formed with a receiving cavity, and the cell 20 is located in the receiving cavity. The arrangement of the flat plate can facilitate subsequent connections and is less difficult to process. The pole assembly 30 may be arranged on a flat plate, or the pole assembly 30 may be arranged on the second housing member 14 having the receiving cavity.

Further, the circumferential edge of the second housing member 14 is provided with a flange, and the first housing member 13 is welded to the flange, so as to ensure reliable welding of the first housing member 13 and the second housing member 14, and a stable connection can be provided. The arrangement of the flange is mainly to ensure that the welding area is increased, thereby improving the stability of welding.

Optionally, when the first housing member 13 has the receiving cavity, the circumferential edge of the first housing member 13 may also be provided with the flange, and the flange of the first housing member 13 and the flange of the second housing member 14 are welded together.

In some embodiments, there are two pole assemblies 30, and the two pole assemblies 30 are a positive pole assembly and a negative pole assembly, respectively. There are also two tab portions 22, and the two tab portions 22 are positive tab portion and negative tab portion, respectively. The positive pole assembly is connected to the positive tab portion, and the negative pole assembly is connected to the negative tab portion.

It should be noted that the pole assembly 30 and the housing 10 are insulated from each other. For example, an insulating member 50 can be used for insulation between the two, or an insulating coating can be used for insulation. The disclosure provides no limitation thereto. The insulating method may be selected according to actual needs.

In an embodiment, the cell 20 is a laminated cell, which is not only convenient for grouping the batteries, but the batteries can also be processed to obtain a longer battery.

Specifically, the cell 20 is a laminated cell, and the cell 20 has a first pole piece stacked onto each other, a second pole piece electrically opposite to the first pole piece, and a separator film arranged between the first pole piece and the second pole piece, so that multiple pairs of the first pole piece and the second pole piece are stacked to form a laminated cell.

Optionally, the battery may be a wound battery, that is, the first pole piece, the second pole piece that is electrically opposite to the first pole piece, and the separator film arranged between the first pole piece and the second pole piece are wound to obtain a wound cell.

In an embodiment, the length of the battery is a, 400mm≤a≤2500mm, the width of the battery is b, and the height of the battery is c, 2b≤a≤50b, and/or 0.5c≤b≤20c.

Further, 50mm≤b≤200mm, 10mm≤c≤100mm.

Further, 4b≤a≤25b, and/or, 2c≤b≤10c.

In the battery in the above embodiment, under the condition that sufficient energy density is ensured, the ratio of the battery length to the battery width is relatively large, and further, the ratio of the battery width to the battery height is relatively large.

In an embodiment, the length of the battery is a, and the width of the battery is b, 4b≤a≤7b, that is, the ratio of the length to the width of the battery in this embodiment is larger, thereby increasing the energy density of the battery and facilitating the battery module to be formed subsequentl y.

In an embodiment, the height of the battery is c, 3c≤b≤7c, and the ratio of the battery width to the battery height is relatively large, and the battery module can be easily formed under the condition that the sufficient energy density is ensured.

Optionally, the length of the battery can be 500mm to 1500mm, the width of the battery can be 80mm to 150mm, and the height of the battery can be 15mm to 25mm.

It should be noted that the length of the battery is the size in the length direction of the battery, the width of the battery is the size in the width direction of the battery, and the height of the battery is the size in the height direction of the battery, that is, the thickness of the battery.

It should be noted that, in an embodiment, the battery manufacturing method is adopted to form the above-mentioned battery. Other structures and related descriptions of the battery may be deduced from the above-mentioned embodiments, and no further description will be incorporated herein.

An embodiment of the disclosure further provides a battery module including the above-mentioned battery.

The battery of the battery module in an embodiment of the disclosure includes a housing 10, a cell 20, a pole assembly 30, and a connecting piece 40. The tab portion 22 includes two or more single-piece tabs extending from the lateral side of the cell body 21. The tab portion 22 and the pole assembly 30 arranged on the housing 10 are connected through the connecting piece 40, so that the connection between the tab portion 22 and the pole assembly 30 is quickly completed. Moreover, the orthographic projections of the tab portion 22 and the pole assembly 30 along the first direction are not overlapped on a first surface 11, and the vertical distance between an end of the tab portion 22 away from the lateral side of the cell body 21 and the lateral side of the cell body 21 is smaller than the vertical distance between the pole assembly 30 and lateral side of the cell body 21. That is, the tab portion 22 and the pole assembly 30 are not directly opposite to each other, and the tab portion 22 is substantially located between the cell body 21 and the pole assembly 30, so the tab portion 22 will not form electrical connection with other structures of the pole assembly 30 away from one side of the cell body 21. In this manner, the safety performance of the battery can be improved.

In some embodiments, the battery module includes at least two batteries. The at least two batteries are arranged side by side, and the first surfaces 11 of the two housings 10 are arranged opposite to each other, so as to be grouped to form a battery module.

An embodiment of the disclosure further provides a battery pack including the above-mentioned battery module.

A battery pack in an embodiment of the disclosure includes a battery module. The battery of the battery module includes a housing 10, a cell 20, a pole assembly 30, and a connecting piece 40. The tab portion 22 includes two or more single-piece tabs extending from the lateral side of the cell body 21. The tab portion 22 and the pole assembly 30 arranged on the housing 10 are connected through the connecting piece 40, so that the connection between the tab portion 22 and the pole assembly 30 is quickly completed. Moreover, the orthographic projections of the tab portion 22 and the pole assembly 30 along the first direction are not overlapped on a first surface 11, and the vertical distance between an end of the tab portion 22 away from the lateral side of the cell body 21 and the lateral side of the cell body 21 is smaller than the vertical distance between the pole assembly 30 and lateral side of the cell body 21. That is, the tab portion 22 and the pole assembly 30 are not directly opposite to each other, and the tab portion 22 is substantially located between the cell body 21 and the pole assembly 30, so the tab portion 22 will not form electrical connection with other structures of the pole assembly 30 away from one side of the cell body 21. In this manner, the safety performance of the battery can be improved.

Optionally, the battery pack includes at least two battery modules, and the battery pack may further include a box body, and the at least two battery modules are arranged in the box body.

An embodiment of the disclosure further provides a battery pack including the above-mentioned battery.

A battery of the battery pack in an embodiment of the disclosure includes a housing 10, a cell 20, a pole assembly 30, and a connecting piece 40. The tab portion 22 includes two or more single-piece tabs extending from the lateral side of the cell body 21. The tab portion 22 and the pole assembly 30 arranged on the housing 10 are connected through the connecting piece 40, so that the connection between the tab portion 22 and the pole assembly 30 is quickly completed. Moreover, the orthographic projections of the tab portion 22 and the pole assembly 30 along the first direction are not overlapped on a first surface 11, and the vertical distance between an end of the tab portion 22 away from the lateral side of the cell body 21 and the lateral side of the cell body 21 is smaller than the vertical distance between the pole assembly 30 and lateral side of the cell body 21. That is, the tab portion 22 and the pole assembly 30 are not directly opposite to each other, and the tab portion 22 is substantially located between the cell body 21 and the pole assembly 30, so the tab portion 22 will not form electrical connection with other structures of the pole assembly 30 away from one side of the cell body 21. In this manner, the safety performance of the battery can be improved.

Optionally, the battery pack includes at least two batteries, and the batteries may be directly arranged in the box body.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative, and the real scope and spirit of the present disclosure is defined by the appended claims.

It should be understood that the disclosure is not limited to the precise structures that have been described above and shown in the drawings, and various modifications and variations can be made without departing from the scope thereof. The scope of the disclosure is limited only by the appended claims.

## Claims

1. A battery, comprising:
a housing (10), which comprises two first surfaces (11) opposite to each other in a first direction;
a cell (20), which is arranged in the housing (10), wherein the cell (20) comprises a cell body (21) and a tab portion (22), the tab portion (22) comprises two or more single-piece tabs extending from a lateral side of the cell body (21), when the single-piece tabs are flattened along a direction perpendicular to the lateral side of the cell body (21), an overlapping direction of the single-piece tabs is the first direction;
a pole assembly (30), which is arranged on the first surface (11);
a connecting piece (40), wherein the tab portion (22) and the pole assembly (30) are connected through the connecting piece (40);
a vertical distance between one end of the tab portion (22) away from the lateral side of the cell body (21) and the lateral side of the cell body (21) is smaller than a vertical distance between the pole assembly (30) and the lateral side of the cell body (21), so that orthographic projections of the tab portion (22) and the pole assembly (30) along the first direction are not overlapped on the first surface (11).

2. The battery according to claim 1, wherein two opposite surfaces of the connecting piece (30) are respectively connected to the tab portion (22) and the pole assembly (30);
or, one of the two opposite surfaces of the connecting piece (40) is connected to both the tab portion (22) and the pole assembly (30).

3. The battery according to claim 1, wherein the orthographic projections of the tab portion (22) and the pole assembly (30) along the first direction on the first surface (11) are sequentially arranged along a second direction, when the single-piece tabs are flattened along the direction perpendicular to the lateral side of the cell body (21), an extending direction of the single-piece tabs is the second direction;
the tab portion (22) comprises a first segment (222) and a second segment (223), one end of the first segment (222) is connected to the cell body (21), and the other of the first segment (222) is connected to the second segment (223), at least a part of the second segment (223) is welded to the connecting piece (40), and one end of the second segment (223) away from the first segment (222) is a free end, and the second segment (223) is not bent.

4. The battery according to claim 3, wherein when the single-piece tabs are flattened in the direction perpendicular to the lateral side of the cell body (21), a vertical distance between one end of at least one single-piece tab away from the lateral side of the cell body (21) and the lateral side of the cell body (21) is smaller than the vertical distance between the pole assembly (30) and the lateral side of the cell body (21).

5. The battery according to any one of claims 1 to 4, wherein the single-piece tabs are gathered to form the tab portion (22), and the tab portion (22) is close to a surface of the housing (10) on which the pole assembly (30) is provided.

6. The battery according to any one of claims 1 to 4, wherein the single-piece tabs are gathered and welded, and after welding, the single-piece tabs are bent along a direction close to the pole assembly (30) to form the tab portion (22), and the tab portion (22) is close to a surface of the housing (10) on which the pole assembly (30) is provided; or, the single-piece tabs are gathered and welded to form the tab portion (22), and the tab portion is away from the surface of the housing (10) on which the pole assembly (30) is provided.

7. The battery according to any one of claims 1 to 4, wherein the housing (10) further comprises four second surfaces (12) arranged around the first surface (11), and an area of the first surface (11) is greater than an area of the second surface (12).

8. The battery according to any one of claims 1 to 4, wherein a length of the battery is a, a width of the battery is b, and a height of the battery is c, 2b≤a≤50b, and/or 0.5c≤b≤20c;
400mm≤a≤2500mm.

9. A battery module, comprising the battery as claimed in any one of claims 1 to 8.

10. A battery pack, comprising the battery as claimed in any one of claims 1 to 8.

11. A battery manufacturing method, comprising:
providing a housing (10), which comprises two first surfaces (11) opposite to each other in a first direction, wherein the first surface (11) is provided with a pole assembly (30) thereon;
providing a cell (20), which is arranged in the housing (10), wherein the cell (20) comprises a cell body (21) and a tab portion (22), the tab portion (22) comprises two or more single-piece tabs extending from a lateral side of the cell body (21), when the single-piece tabs are flattened along a direction perpendicular to the lateral side of the cell body (21), an overlapping direction of the single-piece tabs is the first direction;
providing a connecting piece (40), wherein the tab portion (22) and the pole assembly (30) are connected through the connecting piece (40);
wherein a vertical distance between one end of the tab portion (22) away from the lateral side of the cell body (21) and the lateral side of the cell body (21) is smaller than a vertical distance between the pole assembly (30) and the lateral side of the cell body (21), so that orthographic projections of the tab portion (22) and the pole assembly (30) along the first direction are not overlapped on the first surface (11).

12. The battery manufacturing method according to claim 11, wherein the single-piece tabs are gathered to form the tab portion (22), and the tab portion (22) is close to a surface of the housing (10) on which the pole assembly (30) is provided.

13. The battery manufacturing method according to claim 11, wherein the single-piece tabs are gathered and welded, and after welding, the single-piece tabs are bent along a direction close to the pole assembly (30) to form the tab portion (22), and the tab portion (22) is close to a surface of the housing (10) on which the pole assembly (30) is provided; or, the single-piece tabs are gathered and welded to form the tab portion (22), and the tab portion (22) is away from the surface of the housing (10) on which the pole assembly (30) is provided.

14. The battery manufacturing method according to claims 12 or 13, wherein the tab portion (22) comprises a first segment (222) and a second segment (223), one end of the first segment (222) is connected to the cell body (21), and the other end of the first segment (222) is connected to the second segment (223), at least a part of the second segment (223) is connected to the connecting piece (40), and one end of the second segment (223) away from the first segment (222) is a free end, and the second segment (223) is not bent.
